Europäisches Patentamt

(19) European Patent Office

Office européen des brevets

(11) Numéro de publication: **0 333 537**
**A1**

(12) ## DEMANDE DE BREVET EUROPEEN

(21) Numéro de dépôt: 89400524.8

(22) Date de dépôt: 24.02.89

(51) . Int. Cl.⁴: **G 06 F 15/16**

(30) Priorité: 29.02.88 FR 8802471

(43) Date de publication de la demande:
20.09.89 Bulletin 89/38

(84) Etats contractants désignés:
BE DE ES GB IT NL

(71) Demandeur: **COMMISSARIAT A L'ENERGIE ATOMIQUE**
**31/33, rue de la Fédération**
**F-75015 Paris (FR)**

(72) Inventeur: **Pirson, Alain**
**2 Cours de la Libération**
**F-38100 Grenoble (FR)**

**Robert, Gérard**
**2 rue Charles Ferri**
**F-38400 St. Martin d'Heres (FR)**

(74) Mandataire: **Mongrédien, André et al**
**c/o BREVATOME 25, rue de Ponthieu**
**F-75008 Paris (FR)**

(54) **Dispositif de traitement numérique de signaux.**

(57) Dispositif de traitement numérique de signaux ou d'images apte à effectuer notamment du traitement parallèle, comprenant au moins un module (100) qui comporte une unité d'échange (10), une unité de traitement (20) et une unité de gestion réalisée par exemple par un transputer (30), chaque module étant susceptible d'être relié à au moins un autre module (101) par un macro-lien constitué par un lien de transmission synchrone à haut débit (70) et un lien de transmission série asynchrone (80).

Application aux traitements de signaux et d'images notamment au traitement parallèle.

FIG. 1

EP 0 333 537 A1

**Description**

## DISPOSITIF DE TRAITEMENT NUMERIQUE DE SIGNAUX

L'invention concerne les dispositifs de traitement numérique de signaux, notamment le traitement de signaux monodimensionnels ou bidimensionnels tels que des images. Elle concerne également le traitement parallèle.

On rappelle tout d'abord les architectures les plus simples et les plus classiques qui permettent d'effectuer des traitements numériques de signaux. On trouve en premier lieu les dispositifs constitués par un mono-processeur de type Von Neumann.

Un dispositif de ce type comporte une seule unité de traitement dialoguant par l'intermédiaire d'un bus avec une mémoire contenant les données et les instructions.

L'exécution est séquentielle, c'est-à-dire qu'une seule instruction ne peut être traitée à la fois et qu'une seule information ne peut être échangée avec la mémoire à un moment donné. Cette structure porte le nom de SISD ce qui correspond à l'abréviation de l'expression anglo-saxonne Single Instruction. Single Data Stream (un seul flot d'instructions, un seul flot de données). Les avantages de cette structure sont sa facilité de programmation et sa capacité de traiter n'importe quel problème, à partir du moment où toutes les données sont connues.

Son défaut est sa relative lenteur, ainsi que le goulot d'étranglement constitué par le bus mémoire.

On connaît également un mono-processeur de type Harvard. Ce dispositif a également une structure SISD, mais le goulot d'étranglement est en partie supprimé par le dédoublement du bus mémoire puisqu'il comporte une unité de traitement reliée par un bus d'instructions à une mémoire d'instructions et par un bus de données à une mémoire de données.

On rappelle maintenant ce que l'on entend par dispositifs permettant d'effectuer des traitements numériques en parallèle. Le traitement parallèle consiste à utiliser des processeurs indépendants pour effectuer un traitement correspondant à une fraction d'un traitement global. Les dispositifs permettant d'effectuer ces traitements parallèles sont conçus selon l'un des trois principes connus rappelés ci-dessous :

- un premier principe repose sur une structure SIMD correspondant à l'abréviation de l'expression anglo-saxonne Single Instruction Stream, Multiple Data Stream (un seul flot d'instructions, plusieurs flots séquentiels de données), dans laquelle une unité de contrôle pilote plusieurs processeurs indépendants, comprenant chacun une unité de traitement associée à une mémoire de données,

- un deuxième principe repose sur une structure MISD correspondant à l'abréviation de l'expression anglo-saxonne Multiple Instruction Stream Single Data Stream (un seul flot de données, plusieurs flots d'instructions), dans laquelle le même flot de données subit en cascade plusieurs traitements limitant ainsi le nombre d'accès mémoire.

Ce type de structure ne réduit pas le temps global de traitement d'une donnée, mais il permet un débit supérieur, grâce au recouvrement temporel des tâches effectuées dans chaque étage.

Cette structure appelée également structure "pipe-line" est bien adaptée aux traitements décomposables en plusieurs étapes, lesquels manipulent un flot continu de données.

- un troisième principe repose sur une structure MIMD correspondant à l'abréviation de l'expression anglo-saxonne Multiple Instructions Stream, Multiple Data Stream. Cette structure permet d'obtenir un traitement en parallèle de plusieurs flots de données par plusieurs processeurs travaillant avec des flots d'instructions différents.

On rappelle d'autre part que de façon classique, les échanges inter-processeurs se font selon trois principes différents :

- Un premier principe consiste à relier tous les processeurs et toutes les mémoires à un bus commun. Le bus peut être synchrone auquel cas il supporte un certain nombre de canaux de temps attribués à chaque processeur (ce qui correspond à du multiplexage temporel). Le bus peut être asynchrone, l'accès au bus étant géré dans ce cas par un système d'arbitrage.

- Un deuxième principe consiste à réaliser un réseau matriciel d'interconnexion reliant les processeurs aux mémoires. Cette architecture conduit à une vitesse de transfert élevée. Cependant, le réseau d'interconnexion est très lourd.

- Un troisième principe consiste à associer un bus à chaque processeur et à relier chaque mémoire à ce bus. Cette solution est intéressante lorsque le nombre de bus est peu élevé, mais nécessite une grande quantité de matériel dans le cas d'un grand nombre de processeurs.

Il existe des systèmes ayant une architecture adaptée à former des réseaux de topologie quelconque. De tels systèmes peuvent être utilisés pour réaliser du traitement parallèle basé sur le principe MIMD. Un langage a d'ailleurs été conçu pour des systèmes de type MIMD.

Ces systèmes sont constitués de micro-ordinateurs connus sous la terminologie anglo-saxonne de transputers qui sont reliés entre-eux et qui peuvent dialoguer. L'échange d'information n'a lieu que lorsque les deux transputers sont prêts, l'un à émettre, l'autre à recevoir. Cependant, pour les applications exigeant la manipulation de grosses quantités de données comme les traitements de signaux ou d'images, ils présentent deux inconvénients :

- bien que travaillant à 10 MIPS (Méga Instructions par seconde), le microprocesseur d'un transputer est considéré comme lent par rapport aux processeurs spécialisés (processeurs de traitement de signaux, convolueurs, circuits intégrés orientés traitement d'images, ...)

- le débit de ses liens est en moyenne de 2 Méga octets par seconde, soit un débit beaucoup trop faible par rapport aux exigences des applications citées ci-dessus.

Les performances sont dès lors obtenues par un accroissement de la taille des réseaux constitués de transputers reliés entre eux. Il en résulte une sévère augmentation du coût de la machine et surtout un accroissement de la complexité de programmation. En effet, pour tirer parti d'un réseau de grande taille, il est nécessaire de décomposer finement les algorithmes en tâches concurrentes et de répartir correctement celles-ci entre les divers noeuds du réseau. Cette opération est d'autant plus complexe que les réseaux sont grands.

L'invention a pour but de remédier à ces inconvénients en proposant un dispositif ayant une architecture qui permette d'effectuer des traitements numériques notamment des traitements parallèles de signaux ou d'images avec une grande rapidité et des échanges à haut débit sans que ces performances soient obtenues par une augmentation du nombre de noeuds dans le réseau.

La présente invention a donc pour objet un dispositif de traitement numérique de signaux principalement caractérisé en ce qu'il comprend au moins un module de traitement comportant une unité de traitement, une unité d'échange et une unité de gestion, ces unités étant reliées entre elles par un bus bidirectionnel, l'unité de gestion étant reliée à l'unité d'échange au moyen d'un bus bidirectionnel et d'une liaison permettant d'envoyer des commandes et de recevoir des comptes rendus ; ce module pouvant être relié à au moins un circuit d'exploitation par un macro-lien constitué par un lien de transmission synchrone à haut débit entre l'unité d'échange et le circuit d'exploitation et un lien de transmission série asynchrone entre l'unité de gestion et ce circuit d'exploitation.

L'unité de gestion est réalisée selon l'invention par un micro-ordinateur. Avantageusement, le micro-ordinateur est un transputer.

L'invention a également pour objet un dispositif de traitement dans lequel le circuit d'exploitation est constitué par un module de traitement semblable aux autres modules du dispositif soit strictement identique, soit légèrement différent pour servir d'interface avec un système pilote ou un système hôte.

L'invention a aussi pour objet un dispositif de traitement dans lequel l'unité d'échange comporte au moins une mémoire RAM associée à un registre à décalage permettant des échanges à haut débit de mots de n bits. La mémoire et le registre peuvent par exemple constituer une mémoire RAM à accès série du type vidéo-RAM.

L'invention a aussi pour objet un dispositif de traitement comportant une pluralité de modules, chaque module étant relié à deux autres modules, chaque liaison étant réalisée par un macro-lien, le dispositif ayant une architecture en anneau.

L'invention a aussi pour objet un dispositif de traitement comportant une pluralité de modules, chaque module étant relié à quatre autres modules, chaque liaison étant reliée par un macro-lien, le dispositif ayant une architecture en réseau.

Dans le cas d'une pluralité de modules l'unité d'échange de chaque module comporte autant de mémoires RAM à accès série qu'il y a de macro-lien le reliant à d'autres modules.

L'invention a également pour objet un dispositif de traitement dans lequel l'unité de traitement est constituée par un processeur de signal ou d'image.

L'unité de traitement est selon un deuxième mode de réalisation réalisée par un opérateur micro-programmé.

L'unité de traitement est selon un troisième mode de réalisation réalisée par un circuit spécialisé associé ou non à un processeur d'adressage (le circuit spécialisé peut utiliser le système d'adressage du transputer).

L'unité de traitement est selon un quatrième mode de réalisation réalisée par un réseau de transputers.

L'invention sera mieux comprise à l'aide de la description faite à titre d'exemple non limitatif et en regard des figures annexées qui représentent :

    - la figure 1, le schéma d'un dispositif selon l'invention,

    - la figure 2, le schéma d'un dispositif conforme à l'invention, selon une réalisation particulière,

    - la figure 3, le schéma d'un dispositif selon l'invention, correspondant à une première architecture,

    - la figure 4, le schéma du dispositif selon l'invention, correspondant à une deuxième architecture,

    - la figure 5, le détail des moyens de communication d'entrées-sorties de l'unité d'échange 10,

    - la figure 6, le détail des moyens de communication d'entrées-sorties d'une mémoire RAM à accès série 11,

    - la figure 7, le schéma de réalisation selon un premier mode de l'unité d'échange 10,

    - la figure 8, le détail des moyens de communication d'entrées-sorties de l'unité de traitement 20,

    - la figure 9, le schéma de réalisation selon un deuxième mode de l'unité d'échange 10 d'un module selon l'invention.

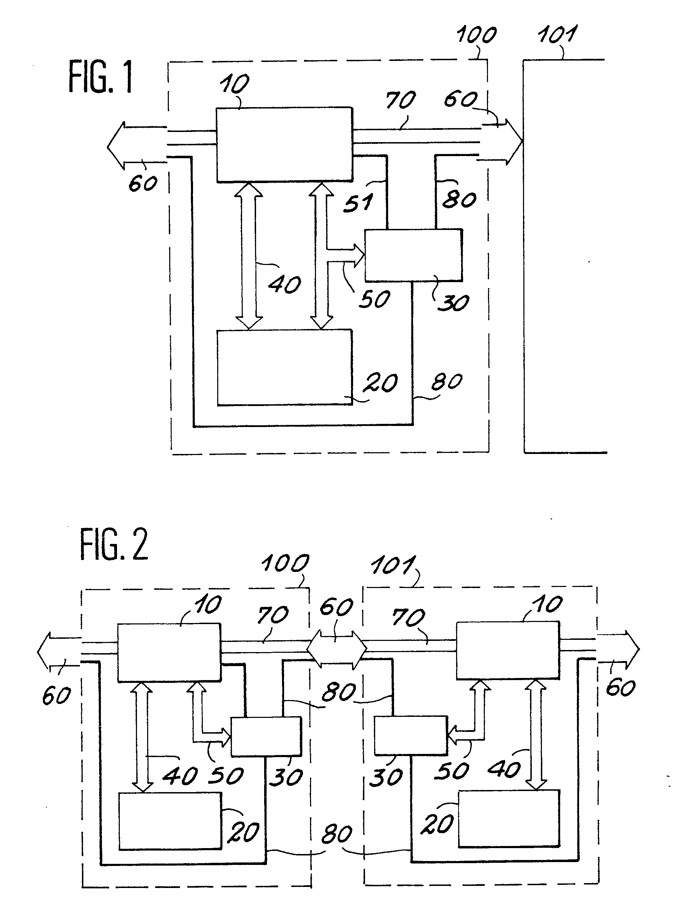

On a représenté sur la figure 1, le schéma d'un dispositif de traitement numérique de signaux selon l'invention. Le dispositif comporte au moins un module de traitement 100 comportant une unité d'échange 10, une unité de traitement 20, une unité de gestion constituée par exemple par un transputer 30. Les unités de traitement 20 et d'échange 10 sont gérées par le transputer. Le transputer 30 peut ne pas avoir à charger ou décharger l'unité de traitement 20 dans le cas où cette dernière est intelligente. Les unités 20 et 30 sont reliées entre-elles par un bus bidirectionnel. Le transputer 30 est relié à l'unité d'échange par un bus bidirectionnel 50 et à l'unité de traitement.

Le module 100 est relié à au moins un circuit d'exploitation 101 par un macro-lien 60 constitué par une liaison de transmission à haut débit synchrone 70 et par une liaison série asynchrone 80 réalisée à partir d'un lien asynchrone du transputer 30.

La liaison synchrone de transmission à haut débit 70 peut être réalisée soit par une liaison de transmission parallèle soit par une fibre optique. Le macro-lien est bidirectionnel et constitue une liaison à haut débit, le lien parallèle 70 étant utilisé pour son débit élevé et le lien du transputer étant utilisé pour son mécanisme de synchronisation.

Le circuit d'exploitation 101 permet d'utiliser les infomations traitées dans l'unité de traitement 20 et transmises à travers l'unité d'échange 10 par le macro-lien 60.

Bien entendu, l'unité de gestion 30 peut être réalisée par un ou plusieurs micro-ordinateurs de type connu, organisés de manière à présenter des liens asynchrones semblables aux liens asynchrones que présente un transputer.

Sur la figure 2, on a représenté un exemple particulier de réalisation de circuit d'exploitation 101. Le circuit 101 est selon cette réalisation un module de type semblable au module 100.

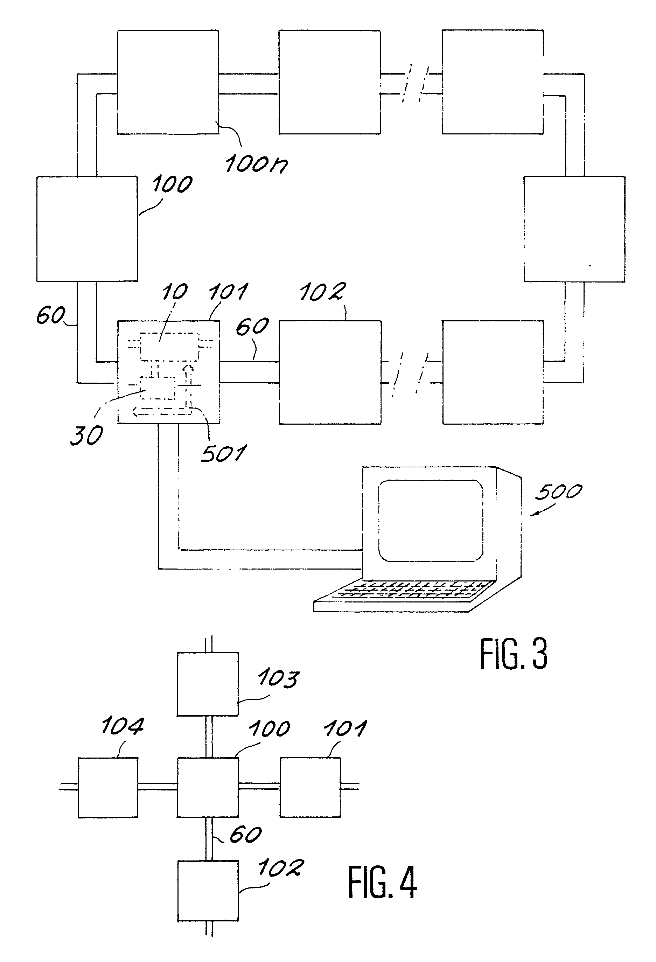

Ce module 101 peut soit être strictement identique au module 100 et constituer un élément comme les autres d'un ensemble permettant d'effectuer du traitement parallèle, soit être un module interface avec un système d'acquisition ou de visualisation, ou un ordinateur (représenté sur la figure 3).

Dans le cas où le module 101 est un module d'interface, l'unité de traitement de celui-ci est uniquement formée par le bus 501 du système, avec lequel elle sert d'interface, et la mémoire à accès série est adressée par ce système.

On peut également pour réaliser l'interface, relier un lien du transputer 30 de ce module 101 à une carte d'interface machine hôte-réseau de transputers (par exemple, la carte B004 de INMOS qui est prévue pour les personal computer). Le transputer est par exemple le circuit IMS T414 de INMOS.

Sur la figure 3, on a représenté un dispositif selon l'invention comportant un ensemble de modules semblables (quelques uns pouvant être identiques). Ces modules 100, 101, 102, 100n sont reliés les uns aux autres par un macro-lien 60. Ils sont reliés de manière à présenter selon cet exemple une architecture en anneau. Le module 101 est un module interface entre l'anneau et un système 500 pilote ou hôte qui peut être un système d'acquisition ou de visualisation ou un ordinateur. Ce module 101 est semblable aux autres modules, cependant comme cela a été décrit à propos de la figure 2, son unité de traitement est uniquement formée par le bus 501.

Sur la figure 4, on a représenté un dispositif selon l'invention comportant également un ensemble de modules semblables 101, 104, ou identiques. Selon cette variante, chaque module est relié à quatre autres modules, par un macro-lien 60. Le dispositif présente selon cette réalisation une architecture en réseau.

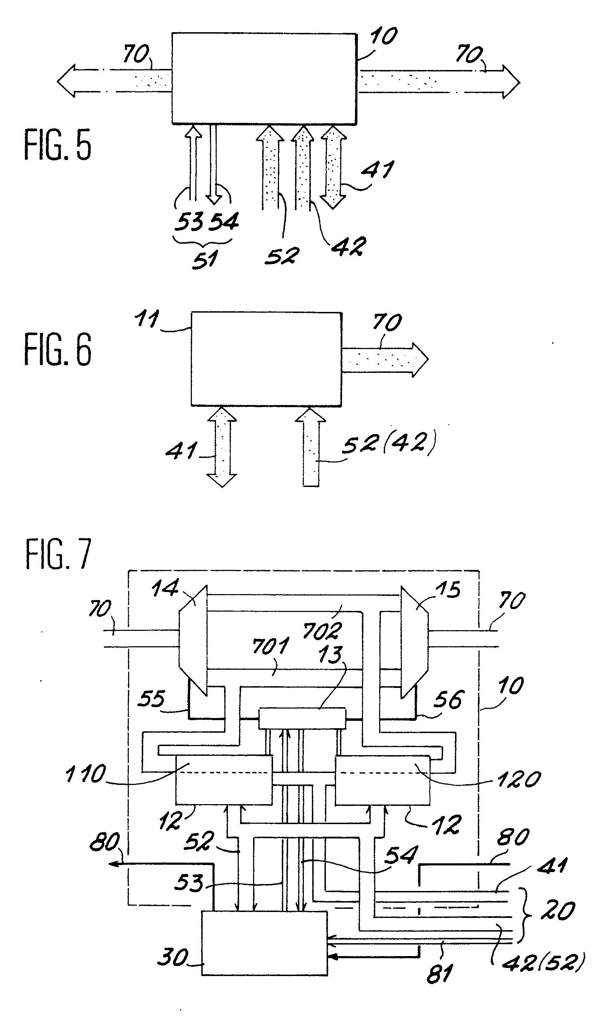

Sur la figure 5, on a représenté les différentes liaisons que peut avoir l'unité d'échange 10 d'un module. Cette unité est conçue de manière à réaliser des échanges à haut débit entre les différents modules reliés entre-eux. L'unité d'échange 10 peut transmettre ou recevoir des informations à partir de deux ou quatre (ou même plus) liens à haut débit 70. Ce lien est selon un premier exemple de réalisation constitué par un bus parallèle. Il peut également être réalisé par une fibre optique. Les n bits d'un mot sont transmis en parallèle sur le bus 70, les mots étant transmis les uns après les autres à haut débit sur ce bus.

L'unité d'échange 10 est reliée à l'unité de traitement 20 par un bus bidirectionnel 41 pour recevoir ou transmettre des données. Sur les figures 1 à 4, le bus reliant l'unité de traitement à l'unité d'échange et qui porte la référence 40, peut selon un mode de réalisation ne représenter qu'un bus de données portant la référence 41. Ce bus 40 peut selon un autre mode de réalisation représenter à la fois un bus de données 41 et d'adresses 42. En effet, dans le cas où l'unité de traitement utilisée a des processeurs intelligents capables de gérer des adresses, cette unité de traitement 20 est reliée à l'unité d'échange 10 également par un bus d'adresse 42.

Dans le cas où l'unité de traitement 20 n'a pas de processeur capable de gérer des adresses, c'est le transputer 30 qui est seul relié à l'unité d'échange par le bus d'adresse 52.

Dans le cas où l'unité de traitement 20 et le transputer 30 sont susceptibles d'adresser l'unité d'échange 10 par un bus d'adresse 42, 52, l'unité d'échange comporte un contrôleur double accès non représenté mais classique en soi qui permet de sélectionner l'un des deux modes d'adressage.

Par ailleurs, l'unité d'échange est reliée au transputer par un lien 53 permettant de transmettre des signaux de commande du transputer à l'unité 10 et par un lien 54 permettant de transmettre des signaux de compte rendus de l'unité d'échange 10 au transputer 30. Ces liaisons sont classiques en soi et sont établies de manière tout à fait connue.

L'unité d'échange 10 comporte au moins une mémoire 11 de type RAM associée à un registre à décalage. L'ensemble constitue de manière avantageuse une mémoire RAM à accès série telle que représentée sur la figure 6. Il s'agit d'un même circuit comportant une mémoire de type RAM c'est-à-dire une mémoire à lecture et écriture à accès aléatoire à laquelle sont associés un ensemble de registres à décalage qui permettent de sortir à haut débit par un port série les n bits en parallèle des mots contenus dans la mémoire.

Une mémoire RAM à accès série peut être réalisée à partir d'une mémoire vidéo-RAM classique. En effet une mémoire vidéo est une mémoire dynamique qui possède un port aléatoire classique au travers duquel on accède à une cellule donnée en fournissant son adresse. Elle possède en outre un port série relié à un registre à décalage. Le registre à décalage est prévu pour stocker l'ensemble des mots d'une ligne de la mémoire. La lecture par le port aléatoire nécessite deux étapes. Tout d'abord on bascule le contenu d'une ligne de la mémoire dans le registre à décalage, ensuite on décale le registre afin d'extraire les informations qu'il contient. Les n bits de chaque mot sortent en parallèle sur le bus parallèle 70 à la fréquence de décalage du registre.

L'écriture de la mémoire est gouvernée par un mécanisme dual. D'abord on procède au remplissage du registre par décalages successifs, ensuite on procède au basculement du contenu du registre dans une ligne de la mémoire.

Les deux ports fonctionnent de manière indépendante et simultanée.

L'unité de traitement 20 ou le transputer n'accèdent qu'à partir du port aléatoire par le bus 52 ou 42. L'unité de traitement voit la mémoire vidéo-RAM comme une mémoire RAM classique.

Sur la figure 7, on a représenté un exemple particulier de réalisation d'une unité d'échange 10. Selon cet exemple, l'unité d'échange permet au module d'être relié à deux autres modules par deux macro-liens formés des liaisons 70 et 80. L'unité comprend selon un exemple particulier deux vidéo-RAM 11 et 12, ce qui permet d'obtenir un recouvrement des échanges au travers des deux macro-liens les deux mémoires pouvant simultanément échanger des informations. Bien entendu, une seule vidéo-RAM peut être utilisée. Les vidéo-RAM 11, 12 sont adressées, selon cet exemple particulier à partir du bus d'adresse 52, les adresses étant générées par le transputer. Bien entendu, comme cela a déjà été décrit, les vidéo-RAM peuvent être adressées par un bus 42 géré par l'unité de traitement 20.

Deux types d'accès aux vidéo-RAM sont envisageables :
- un accès classique par le port aléatoire, réalisable par l'unité de traitement et par le transputer,
- un accès en mode ligne uniquement pour le transputer, cet accès a pour but de charger le registre à décalage pour un échange avec un module voisin ou de transférer le contenu du registre à décalage vers une ligne de la mémoire (après échange).

Dans ce dernier mode et de manière tout à fait classique, le transputer envoie un ordre de lecture ou d'écriture aux mémoires (vues comme une mémoire unique par le transputer 30) qui basculent leur contenu dans le registre à décalage 110, 120 dans un sens, ou qui reçoivent le contenu du registre à décalage dans l'autre sens, et un ordre d'émission ou d'acquisition de données au séquenceur 13 qui déclenche le transfert choisi au travers du lien parallèle (bus 70) du macrolien 60. Les signaux de sélection de sortie 55, 56 envoyés par le transputer 30 sur les multiplexeurs 14 et 15, permettent de sélectionner l'un des bus 701 ou 702 issus du port série des mémoires 11 et 12.

Le transputer 30 permet par les lignes 53 et 54, 55 et 56 de contrôler et de gérer l'unité d'échange et les macro-liens.

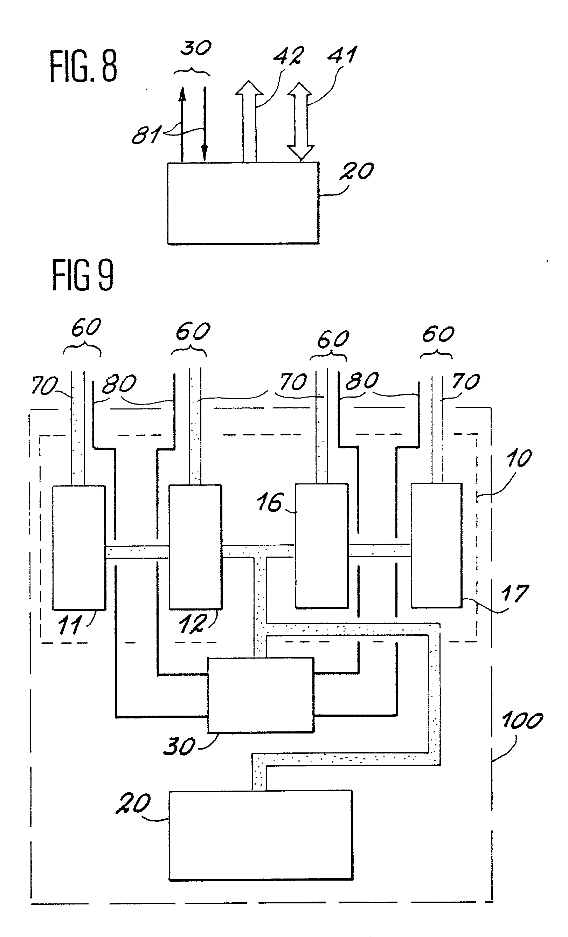

L'unité de traitement 20 est reliée à l'unité d'échange 10 par les bus 41, 42 et la liaison 81 permettant comme cela est décrit à propos de la figure 8, d'effectuer des vols de cycles.

Les liens 80 sont les liens classiques qui permettent aux transputers d'échanger des messages selon un protocole de communication connu par les différents transputers du réseau afin d'établir des liaisons entre eux et entre les unités d'échanges 10.

Les travaux effectués par tous les éléments d'un module sont vus comme des tâches s'exécutant simultanément, conformément au modèle connu sous la marque OCCAM qui est un langage pour la programmation parallèle. Ce langage est donc parfaitement adapté pour la mise en oeuvre du dispositif selon l'invention. En effet dans le langage OCCAM, les tâches (ou processus) sont autonomes avec leurs propres variables locales. La communication entre les processus est accomplie par un mécanisme appelé canal. Quand il faut communiquer entre des processus situés sur des modules séparés, les canaux OCCAM sont constitués par des liens matériels. Ces liens sont donc réalisés par les macroliens 60 et les processus sont exécutés par les unités de traitement 20 selon l'invention.

Sur la figure 8, on a représenté le détail des moyens de communication entre une unité de traitement 20 intelligente et le transputer 30 d'une part, et l'unité d'échange 10 d'autre part.

L'unité de traitement est composée d'un opérateur pouvant par exemple adresser l'unité d'échange comme une mémoire classique. Cet opérateur accepte des vols de cycles, c'est-à-dire des accès directs mémoire (DMA), qui sont nécessaires pour assurer le fonctionnement de l'unité d'échange. Ce mécanisme est géré par le Transputer. Lorsque celui-ci désire accéder à l'unité d'échange, il la "confisque" à l'unité de traitement, effectue un certain nombre de tâches, puis la lui rend. La demande et le compte rendu de suspension de l'unité de traitement sont véhiculés par les lignes de commande "vol de cycles" obtenus à partir de la liaison 81.

Dans le cas où l'unité de traitement 20 peut adresser l'unité d'échange 10, elle comporte de manière classique, un processeur avec une mémoire RAM locale, une unité arithmétique et logique et un processeur d'adressage. On peut utiliser par exemple un processeur DSP 32C de ATT.

Dans le cas où l'unité de traitement n'est pas intelligente, elle est reliée à l'unité d'échange uniquement par le bus de données 41. Dans ce cas, ce circuit 20 comporte par exemple un coprocesseur, un circuit intégré spécialisé (comme un circuit systolique de traitement d'image).

Sur la figure 9, on a représenté un deuxième mode de réalisation de l'unité d'échange 10 d'un module 100. Selon ce mode de réalisation, l'unité d'échange comporte quatre vidéo-RAM. Le module 100 comporte donc dans ce cas quatre macro-liens 60, chacun étant obtenu à partir d'un bus parallèle 70 relié au port à accès série d'une mémoire donnée et d'un lien 80 du transputer 20.

Ce mode de réalisation permet de relier un module particulier à quatre autres modules et d'obtenir ainsi une architecture en réseau.

En conclusion, le transputer est le maître du module. Il gère l'unité d'échange et l'unité de traitement qu'il considère comme ses ressources. Ainsi,
- il réalise la synchronisation de l'unité d'échange avec l'unité de traitement et avec les unités d'échange des modules voisins par le biais de leur Transputer respectif,
- il gère la mémoire vidéo, allouant les zones de mémoires aux paquets d'informations entrants, déterminant l'emplacement des paquets sortants et les zones de travail réservées à l'unité de traitement,
- il configure l'unité d'échange et exécute les protocoles correspondants,

- il gère également l'unité de traitement qu'il considère comme un coprocesseur et à laquelle il alloue des tâches.

Les travaux effectués par tous les éléments d'un module sont vus comme des tâches s'exécutant simultanément, avantageusement de manière conforme au modèle OCCAM. La gestion de ces éléments sur le Transputer du module est effectuée par un ensemble de processus "concurrents". Le transputer supporte le modèle OCCAM du parallélisme et notamment le principe de synchronisation des processus concurrents aux moyens de canaux. Ainsi, la synchronisation des processus de gestion sur le transputer entraîne une synchronisation implicite des éléments d'un module. Globalement le dispositif se comporte comme une machine OCCAM, respectueux du modèle de parallélisme de ce type de machine.

Dans le cas où les modules ne sont équipés que de deux macro-liens, l'architecture globale est de type linéaire c'est-à-dire pipe-line, la chaîne pouvant être fermée comme cela a été décrit à partir de la figure 3. Ceci est possible car l'interface est réalisé à l'aide d'un module de même type que les autres. Le fait de pouvoir fermer la chaîne et d'obtenir ainsi une architecture en anneau permet d'utiliser les macro-liens pour recycler les informations lorsque des traitements supplémentaires sont nécessaires et cela sans avoir à recharger ces informations.

Le transfert au travers d'un macro-lien s'effectue en deux étapes :

1° déroulement d'un protocole entre les transputers des deux modules désirant dialoguer, ce protocole dure environ 2 µs.

2° transfert d'un paquet à grande vitesse entre les mémoires vidéo des deux modules concernés, cet échange prend 256x50 ns = 12,8 µs. Il faut au total 14,8 µs pour échanger 256 mots. Cela donne en moyenne 58 ns par mot échangé, soit un débit de 17,3 millions de mots par seconde. Si la largeur du lien parallèle et donc la taille des mots échangés est de 16 bits, on obtient un débit de 275 Méga-bits par seconde (Mbits/s). A titre d'exemple, un lien de transputer tout seul échange entre 10 et 20 Mbits/s.

Les domaines d'application industriels sont nombreux. On peut utiliser le dispositif selon l'invention partout où le traitement d'un volume important d'informations est requis. On peut citer entre-autres :
- la vision dans des systèmes temps réel d'acquisition et de traitement d'images,
- la synthèse d'images,
- la reconstruction d'images à partir de données CAO,
- les stations de travail graphiques,
- le traitement temps réel de signaux numériques,
- les accélérateurs de calculs (number crunchers),
- la simulation et la modélisation : éléments finis, simulateurs,...
- la gestion : la manipulation de bases de données. - l'imagerie 3D.

## Revendications

1. Dispositif de traitement numérique de signaux comprenant au moins un module de traitement (100) comportant une unité de traitement (20), une unité d'échange (10) et une unité de gestion (30), ces unités étant reliées entre-elles par un bus bidirectionnel (40), l'unité de gesion étant relié à l'unité d'échange (10) par un bus bidirectionnel (50) et par une liaison (51) permettant d'envoyer des commandes et de recevoir des comptes rendus, caractérisé en ce que chaque module (100) est susceptible d'être relié à un ou plusieurs circuits d'exploitation (101) par un macro-lien (60) constitué par un lien (70) de transmission synchrone à haut débit entre l'unité d'échange (10) et le circuit d'exploitation (101) et un lien (80) de transmission série asynchrone entre l'unité de gestion (30) et ce circuit d'exploitation (101) ; en ce que l'unité de gestion (30) comporte un micro-ordinateur du type transputer ; en ce que le ou les circuits d'exploitation (101) sont constitués par un module de traitement semblable aux autres modules du dispositif.

2. Dispositif de traitement selon la revendication 1, caractérisé en ce que le ou les circuits d'exploitation sont identiques au module de traitement (100).

3. Dispositif de traitement numérique selon la revendication 1, caractérisé en ce que le circuit d'exploitation (101) est constitué par un module comportant une unité d'échange (10), un transputer (30) et une unité de traitement constituée par un bus (501) pour servir de module d'interface avec un système pilote ou hôte (500).

4. Dispositif de traitement numérique selon l'une quelconque des revendications 1 à 3, caractérisé en ce que l'unité d'échange (10) comporte au moins une mémoire RAM associée à un registre à décalage permettant des échanges à haut débit de mots de n bits lus ou écrits dans la mémoire.

5. Dispositif de traitement numérique selon la revendication 4, caractérisé en ce que la mémoire RAM (11) associée à un registre à décalage constitue une mémoire RAM à accès série du type vidéo-RAM.

6. Dispositif de traitement numérique selon l'une quelconque des revendications 1 à 5, caractérisé en ce que le dispositif comporte une pluralité de modules (100, 100n) chaque module étant relié à deux autres modules de manière à former une architecture en anneau ; l'unité d'échange (10) de chaque module comprenant au moins deux mémoires RAM à accès série (11, 12).

7. Dispositif de traitement numérique selon l'une quelconque des revendications 1 à 5, caractérisé en ce que le dispositif comporte une pluralité de modules (100-104), chaque module étant relié à quatre autres modules de manière à former une architecture en réseau pour effectuer du traitement parallèle, l'unité d'échange (10) de chaque module comprenant au moins quatre mémoires RAM à accès série (11, 12, 16, 17).

8. Dispositif de traitement numérique selon l'une quelconque des revendications 1 à 7, caractérisé en ce que le lien de transmission synchrone à haut débit (70) est réalisé par un bus parallèle.

9. Dispositif de traitement numérique selon l'une quelconque des revendications 1 à 7, caractérisé en ce que le lien de transmission synchrone à haut débit est réalisé par une fibre optique.

10. Dispositif de traitement numérique selon l'une quelconque des revendications 1, 2 et 4 à 9, caractérisé en ce que l'unité de traitement (20) est constituée d'un processeur de signal ou d'image.

11. Dispositif de traitement numérique selon l'une quelconque des revendications 1, 2 et 4 à 9, caractérisé en ce que l'unité de traitement (20) est constituée d'un opérateur micro-programmé.

12. Dispositif de traitement numérique selon l'une quelconque des revendications 1, 2 et 4 à 9, caractérisé en ce que l'unité de traitement (20) est constituée d'un circuit spécialisé associé ou non à un processeur d'adresse.

13. Dispositif de traitement numérique selon l'une quelconque des revendications 1, 2 et 4 à 9, caractérisé en ce que l'unité de traitement (20) est constituée d'un réseau de transputer.

FIG. 1

FIG. 2

FIG. 3

FIG. 4

FIG.5

FIG.6

FIG.7

FIG. 8

FIG 9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 234 182 (IBM)<br>* Page 3, ligne 20 - page 4, ligne 30; figure 3 *<br>--- | 1,2,4-10,12 | G 06 F 15/16 |
| Y | ELEKTRONIK, vol. 35, no. 24, 28 novembre 1986, pages 119-126; P. ECKELMANN: "Der Transputer als Grafik-Controller"<br>* Figures 1,2 *<br>--- | 1,2,4,5,8 | |
| A | <br>--- | 13 | |
| Y | EP-A-0 234 181 (IBM)<br>* Page 3, lignes 50-54; figure 4 *<br>--- | 6,7 | |
| Y | EP-A-0 212 806 (NORTHERN TELECOM LTD)<br>* Résumé; revendication 10; figure 1 *<br>--- | 9 | |
| Y | US-A-4 244 019 (ANDERSON et al.)<br>* Colonne 2, lignes 9-45; figure 1 * | 10 | |
| A | <br>--- | 1,3 | **DOMAINES TECHNIQUES RECHERCHES (Int. Cl.4)** |
| Y | US-A-4 547 849 (LOUIE et al.)<br>* Figure 1 *<br>--- | 12 | G 06 F 15 |
| A | US-A-3 713 107 (BARSAMIAN)<br>* Colonne 2, lignes 1-35; figure 5 *<br>--- | 1 | |
| A | PATENT ABSTRACTS OF JAPAN, vol. 7, no. 274 (P-241)[1419], 7 décembre 1983, page 33 P 241; & JP-A-58 151 665 (TOKYO SHIBAURA DENKI K.K.) 08-09-1983<br>* Résumé; figure *<br>---           -/- | 1,3 | |

Le présent rapport a été établi pour toutes les revendications

| Lieu de la recherche | Date d'achèvement de la recherche | Examinateur |
|---|---|---|
| LA HAYE | 22-05-1989 | SCHENKELS P.F. |

EPO FORM 1503 03.82 (P0402)

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 206 512  (TEXAS INSTRUMENTS INC.) <br> * Figures 1,2 * <br> ----- | 2,6,7 | |
| | | | **DOMAINES TECHNIQUES RECHERCHES (Int. Cl.4)** |

Le présent rapport a été établi pour toutes les revendications

| Lieu de la recherche | Date d'achèvement de la recherche | Examinateur |
|---|---|---|
| LA HAYE | 22-05-1989 | SCHENKELS P.F. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
    .........................................................................
& : membre de la même famille, document correspondant

EPO FORM 1503 03.82 (P0402)